# EUROPEAN PATENT SPECIFICATION

(11) **EP 3 001 891 B1**
(45) Date of publication and mention of the grant of the patent: **05.12.2018**
(21) Application number: 14306561.3
(22) Date of filing: 03.10.2014
(51) Int. Cl.: A01D 43/08, G01G 19/08, G01G 13/00, A01D 41/127

(54) **Nonstop silage plot harvester**
Unterbrechungsfrei betriebener Silagen-Parzellenernter
Moissonneuse pour parcelles de plantes fourragères fonctionnant sans interruption

(43) Date of publication of application: 06.04.2016
(73) Proprietor: Limagrain Europe, 63360 Saint-Beauzire (FR)
(72) Inventor: Van de Pas, Bert, 4453 VC 's-Heerenhoek (NL); Reyns, Piet, 3473 WAANRODE (BE)
(74) Representative: Lavoix

(56) References cited:
- US-B1- 6 483 583
- CALVIN H PEARSON ET AL: "A Versatile, Low-Cost Weighing Hopper for Small-Plot Field Research", AGRONOMY JOURNAL, AMERICAN SOCIETY OF AGRONOMY, USA, vol. 105, no. 3, 11 March 2013 (2013-03-11), pages 619-622, XP009181625, ISSN: 1435-0645, DOI: 10.2134/AGRONJ2012.0479N

## Description

The invention relates to nonstop silage plot harvester and harvest method, especially for continuous harvesting of plots, especially research plots.

It is a common practice to produce numerous research silage plant plots within a single field. Generally these plots are organized in parallel rows with a dedicated alley to separate each of individual plots. It is imperative that the silage plant varieties be separately considered during harvesting to ensure accurate classification of the silage properties, such as density, moisture content, weight or yield, digestibility components, protein content and oil content.

To ensure this separation, existing techniques require the operator to stop when reaching an alley to allow the silage chops from the harvested plot to be weighed, identified and withdrawn from the harvester before to go through the following plot. This is the current process: harvest and chop a plot, wait till all harvested material is in the weighing bin, wait till the weighing bin is stabilized, weight and transmit the weight to the computer, open and close the weighing bin in order to withdraw the crop, start the harvest of the following plot. This stop and go movement upon reaching an alley places a significant amount of stress on the machine and its operator and also accounts for a significant amount of the overall time spent harvesting the silage plants. In addition, compared to the grain harvest, silage harvest must be done during a shorter window period to minimize the maturity and moisture differences between plots, and the harvest can be done only during some specific hours during the day.

This problem is generally solved by using several harvesters but with a huge investment.

In the field of grain maize harvesters some developments have been done to collect two plots at the same time with one machine with twin plot harvester, as the one described in US 7,681,383. Several commercial solutions are now available. However the twin plot harvester is a quite complicated and big machine that is difficult to handle and transport. The cost of such a machine with duplication of internal units is twice the cost of a single plot silage harvester.

Still in the field of grain harvesters, systems for continuous harvesting of grain from plots have been developed as well. US 7,318,310 describes a device with a combine header and two grain treating units, with their own grain passage and compartment for storing grain during parameter analysis. A lateral shiftable gate placed between the header and the passages allows delivering collected grains towards the passage connected to the compartment that is momently free of grains. US 6,848,243 and US 7,398,636 disclose a different solution using one of the conventional parts in a combine as a collection area in which the grains collected from a row temporarily accumulate until opening of a gate and delivering to a specific collection bin for analysis. US 7,743,591 discloses another system using a cross auger and an auger trough, in order to deliver crop to a processing assembly only when the preceding plot grain have been treated and removed. US 5,957,773 discloses a device comprising multiple containers coupled with weight sensors and a grain diversion unit so that sequential test plots may be harvested and measured with little or no interruption.

The Twin High Capacity GrainGage™ solution developed by Juniper Systems and integrated on the Wintersteiger combines for grains, contains 2 pre-containers (for the left and the right plots respectively) and a weigh bucket with the sensors required for weight and moisture measurement. The weighing cycle is actuated manually at the end of the plot by pressing a button. The harvested material is fed from the pre-container into the weigh bucket where the measurement occurs, the left plot is measured first, before the right plot. This system allows continuous harvesting of long plots with the same variety with a single measuring device. It doesn't allow continuous harvest over different plots with different varieties

All these solutions address the harvesting of grain corn and not silage. For a same plot organization the amount of matter collected for silage is three to four times more important, with higher wet matter volume and weight of sample. The continuous harvesting devices already described cannot be adapted to silage according the nature and quantity of material in silage harvest. The volume of the harvest poses additional problems in terms of geometry and overall dimensions of the harvester with respect to research silage plots and fields. Also the nature of the header and silage transporting method in a silage harvester is totally different of a combine, where none of these conventional components can be used for collection of the silage similar to the grain combines. Moreover using a single bin for weighing purpose is also preferable for the reliability of the results.

US 6 483 583 discloses research combine to harvest test plots and to evaluate the harvested grain. The combine is adapted to take samples of the grain from the test plots and analyze properties of the grain in the field. It includes a test chamber assembly designed to collect a sample of grain and to evaluate the grain to determine various properties of the grain. The combine comprises a storage bin from which a sample may be taken for analysis, a weight box and a storage bin which stores the crop after dumped from the weight box. Doors are located at the bottom of the storage bin and are periodically open to allow the forage to fall onto a conveyor. The combine is designed to treat several plots. The same document also discloses a chopper to cut and chop forage. The chopper comprises a forage analysis device.

An objective of the invention is thus to provide for a silage plant harvester and plot harvest a method allowing harvesting and analyzing silage chops with high speed, in a continuous manner, while recovering plots parameters.

Another objective of the invention is to provide for such a harvester having a simple and reliable structure, not incurring substantial over cost with respect to traditional plot silage harvesters

Still another objective of the invention is to provide for such a technical solution that can be easily implemented on existing or traditional harvesters.

These objectives are met with the method and silage harvester as described below.

A first object of the invention is a method as defined in claim 1.

Considering two successive plots A and B, A being harvested first, before plot B, harvesting and chopping plants from plot B, and collecting all or part of the crop of this plot in a waiting bin occurs during the stay of the crop from plot A in the measuring bin and during the determination of at least one silage parameter on crop A inside the measuring bin. Then, transferring all or part of the crop B from said waiting bin to said measuring bin is performed after completion of parameter measurement on crop A in the measuring bin and the withdrawal of the crop A contained in the measuring bin.

According to the invention, the operations of withdrawal from measuring bin and transfer from waiting bin to measuring bin may be all automatically controlled by processing means at the end of measuring step in the measuring bin.

Preferably, waiting bin and measuring bin may be both equipped with an exit that is able to be closed or open. Advantageously, these bins are equipped with a type of opening doors that open and close fast and release the crop fast without leaving any residual crop. Preferably, waiting bin exit may be closed before beginning harvesting and chopping plants from a plot. Preferably, transferring all or part of a crop from said waiting bin to said measuring bin may be performed after withdrawal of crop contained in the measuring bin and closure of measuring bin.

Preferably, the operations of withdrawal from the measuring bin, closure of the measuring bin and aperture of the waiting bin may be all automatically controlled by processing means at the end of measuring step. Preferably, this is combined with a control such as optical control that the measuring bin is empty.

Preferably, closing of the waiting bin may be controlled by processing means when passing from one plot to another. Preferably, this operation is combined with a control such as optical control that the waiting bin is empty.

Still preferably, the plots may be geolocalized and the operation of closing of the waiting bin may be automatically controlled by processing means depending on the geolocalization of the harvester with respect to the plots. The waiting bin is preferably closed at a predetermined time after the harvester starts a new plot and remains closed at least the time that is necessary for the parameter measurement in the measuring bin to be completed. This time does not exceed the time for harvesting one plot. Preferably, this time is about half the time required for full harvest of one plot.

In a simple embodiment, transferring the crop from the waiting bin to measuring bin occurs by gravity. This embodiment allows one to conceive a silage harvester which is compact.

For similar reason, it is preferred that the crop leaving the measuring bin fall by gravity. In preferred embodiments, the crop falls onto a conveying belt and/or can be progressively deposited on the ground or collected in a collector.

In an embodiment, weight and/or moisture of the crop contained in the measuring bin may be determined and recorded. The measuring bin may be called a weighting bin. Preferably, the harvester may be equipped with a processing means able to filter the noise (e.g. by averaging over a certain time) created on the weight measurement by the movement (driving) of the harvester at the time of weighing.

In an embodiment, the crop leaving the measuring bin may fall onto a conveyor belt and parameters of the crop during its stay on the conveyor belt may be measured and recorded.

In an embodiment, each plot may be harvested in a continuous manner and part or the whole volume of the crop may be recovered in the waiting bin.

The volume of the waiting bin may be sized to contain the whole crop from one plot or may be sized to contain a fraction of the whole crop from one plot. In a preferred embodiment, it is sized to contain about half the whole crop from one plot. This volume is sufficient for the different steps to be performed during the time required for harvesting one plot. In this case, the waiting bin collects crop from a plot while the preceding crop is within the measuring bin. Once the parameter measurement is completed in the measuring bin, the latter is open and the crop withdrawn. Once the measuring bin is empty and closed, the crop stored in the waiting bin is transferred or falls into the measuring bin while the plot continues to be harvested. The remaining crop falls directly within the measuring bin. Once the harvest is completed, the waiting bin is closed and is ready to receive the crop from the following plot. The size of the waiting bin may thus be adapted with respect to the crop volume of one plot and the speed of plot harvest. This may be easily determined by the person skilled in the art.

The weighing may be performed once the whole crop has been transferred into the weighing or measuring bin, and after stabilization. Preferably, the measuring bin is sized in order to be able to contain the whole crop of one plot.

As an alternative, each plot may be harvested in several successive operations and the data measured on each of the harvests may then be compiled. In this case, the succession of operations described above apply to fractions of plots, e.g. first half plot A, then second half plot A, then half plot B, then second half plot B, and so on.

Another object of the invention is a silage harvester as defined in claim 9. Advantageously, these bins are equipped with a type of opening doors that open and close fast and release the crop fast without leaving any residual crop. Embodiments are disclosed in the following detailed description and may comprise single or twin tipping buckets or gates, wherein tipping up open the bin with no remaining planar surface at the bottom. The waiting and measuring bin's exits each have monitored means allowing to close or open said exits. The harvester comprises at least one parameter measuring sensor allowing parameter determination on the crop contained in the measuring bin. The harvester comprises electronic processing means that recover measured parameters and controls opening and closing of the waiting and measuring bins.

In an embodiment, the silage harvester may be a twin plot silage harvester. The twin plot silage harvester may comprise the different unit sets as disclosed herein, in duplicate, with the unit sets being placed for example one behind the other or aside one another. All the additional features that are developed herein may apply to the basic silage harvester and to the twin silage harvester and the harvest method may similarly be a twin plot silage harvest method..

Preferably, the measuring bin is placed below the waiting bin. This embodiment allows one to conceive a silage harvester which is compact.

According to the invention, the harvester comprises geolocalization means.

The electronic processing means are configured so that they detect or are informed of the harvester passing from one plot to another and so control closing of the waiting bin. The electronic means are functionally connected to the geolocalization means.

In an embodiment, the processing means control waiting bin's exit opening and closing, measuring bin's exit opening and closing, end of parameter measurement in the measuring bin and whether measuring bin is empty.

In an embodiment, the measuring bin is a weighing bin which is coupled to a weight sensor allowing the determination of the weight of the measuring bin content. Preferably, the harvester may be equipped with a processing means able to filter the noise (e.g. by averaging over a certain time) created on the weight measurement by the movement (driving) of the harvester at the time of weighing.

Preferably or alternatively, the measuring bin may be coupled to one or several sensor(s) to determine silage quality. In particular, the measuring bin is coupled to a moisture sensor allowing the determination of moisture of the measuring bin content.

Preferably, the internal volume of the measuring bin is selected in order to contain the whole volume of one plot. Preferably, the volume of the waiting bin is selected in order to contain the whole volume or a fraction of the crop of one plot. In an embodiment, the volume of the waiting bin is selected in order to contain about half the volume of crop of one plot. The volume of the waiting bin may thus be adapted with respect to the crop volume of one plot and the speed of plot harvest, and be optimized on this basis in order to render the harvester as compact as possible and optimize the harvest speed. This may be easily determined by the person skilled in the art.

In an embodiment, a mechanical or hydraulic system allows the waiting bin and the cyclone to be lowed within the weighting bin. Preferably, the system moves the waiting bin upward over the cyclone, then moves both down into the measuring bin. This position is the one used at the time the harvester is not in harvest action, in particular is transported or displaced. The harvester is thus compact and has a similar size than those previously described.

The harvester may have a wheel or track mounted harvester chassis or main frame. It may be self-propelled and in this case it may have a cab for the operator of the harvester. As an alternative it may be attached to a tractor and the like. It may be equipped with a cutting tool, typically with a two-row cutting tool for cutting two plant rows, and a chopping unit. Cutting tool and chopper may be integrated in a single header.

The present invention may be used to harvest research plots of any silage plant source, such as all the forages crops, and all harvested system of entire plants example are grasses, sugarcane, miscanthus, and other plants produced for biomass. Maize is an example.

The present invention will now be described using non-limiting embodiments referring to the Figures.
Figure 1 is a schematic front view of relevant parts of a harvester.
Figure 2 is a schematic side view of relevant parts of a harvester.
Figure 3 is a view of several plots.

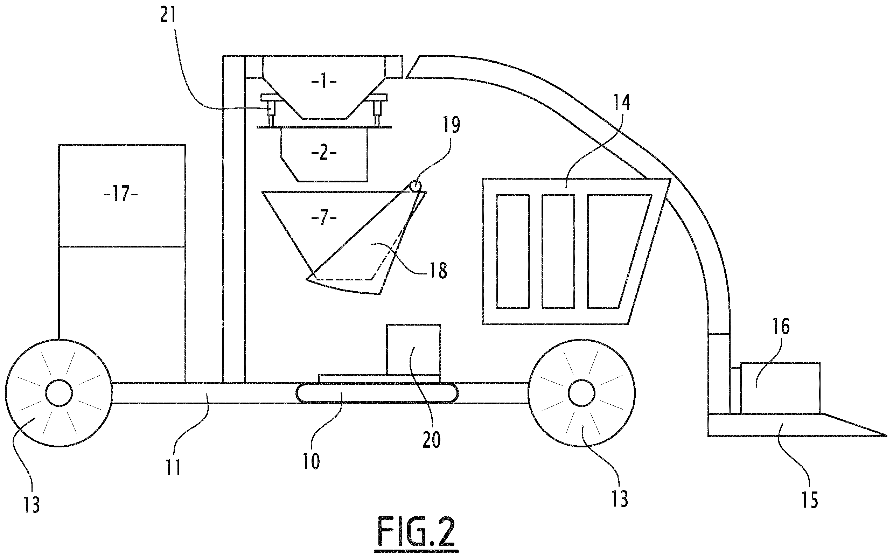

The research harvester is a single-plot harvester in the explanation but the invention can be built on a dual silage chopper. As usual, as best shown on Figure 2, it has a wheel 13 or track mounted harvester chassis or main frame 11, the main frame supports a cab 14 for the operator of the harvester, a cutting tool 15 (typically with a two-row cutting tool for cutting two plant rows) and a chopping unit 16, and is operated by a main power supply 17. Cutting tool and chopper are often integrated in a single header like the Kemper C1200 mounted forage harvester. The cab 14 holds a GPS system and a data collection storage device and/or electronic processing means that records (or collect and transmit to a distant computer) test results gathered during parameter measurements and controls operation of the harvester and internal functions of the treating units inside the harvester depending on the position of the harvester in the field with respect to the research plots.

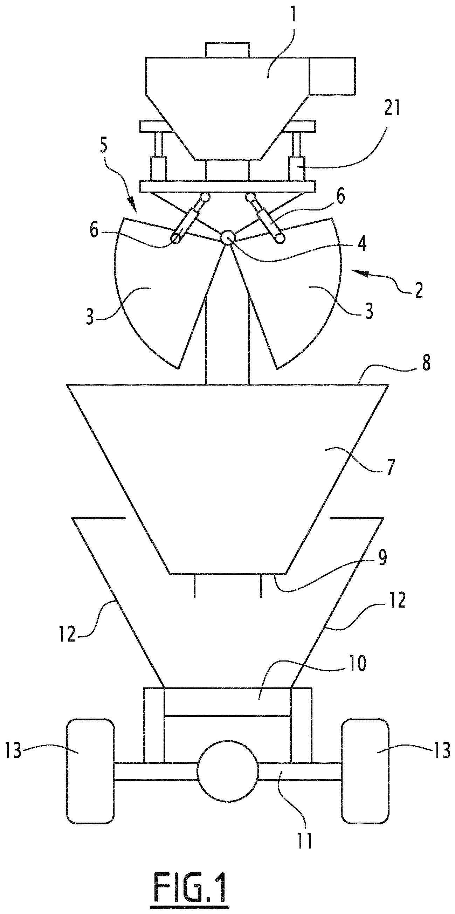

As shown on Figures 1 and 2, there is provided a schematic view of a part of the harvester, with, at the top, a usual cyclone 1 which serves at eliminating air produced by the chopping unit 16. The single silage collecting unit according to the invention is placed downstream the cyclone and comprises a waiting bin 2. This bin has the form of a clamshell bucket with two elementary tipping buckets 3 mounted on a top horizontal axis 4 and an open face 5 at the top. When closed, the bin defines an internal volume between the two elementary buckets 3. The crop falls from cyclone 1 into bin 2 through open face 5 and the internal volume is sized in order to accommodate at least half the volume of silage chops of one plot. Dimensions may be for example about 60 cm height and about 80 x about 70 cm at the top of said bin. The rest position of the clamshell bucket structure is the closed position. Both elementary buckets 3 may be actuated (tipped up) for opening the clamshell bucket using actuators 6 (for instance hydraulic cylinders) and opening the so-called waiting bin exit at the basis of the bin. The waiting bin 2 is also equipped with several sensors (not shown), one detecting the position "closed" of the waiting bin, the other detecting the position " fully open" of the same.

The silage collecting unit then comprises a measuring or weighing bin 7 located below the waiting bin. This measuring bin 7 comprises an open top face 8 facing the waiting bin exit, so that opening of the waiting bin causes the content of the same to fall into the measuring bin 7. The measuring bin 7 is equipped with weight sensors (not shown) and possibly of any other useful sensor for detecting wished parameters of the crop, these sensors being of usual type and do not need to be described further herein. The bottom face 9 of the measuring bin has a tipping gate 18 articulated on a top shaft 19 and actuator means (not shown) that cause the gate to be closed (tipping down) or open (tipping up). The bottom face 9 is also equipped with several sensors (not shown), one detecting the position "closed" of the gate, the other detecting the position " fully open" of the same. For transportation purpose, an hydraulic system 21 allows the waiting bin to move upward over the cyclone, e.g. for about 20 cm, and another hydraulic system allows the set cyclone and waiting bin to be lowed within the weighting bin (e.g. about 60 cm).

The silage collecting unit then comprises a conveyor belt 10 placed between walls 12 schematically represented only on Figure 1, belt and walls extending parallel to the longitudinal axis of the harvester. The conveyor belt is operated by a power supply, preferably the main power supply 17. It is placed below the measuring bin 7 so that it receives the crop falling from the measuring bin once gate 18 opens. A device 20 comprising a near-infrared (NIR) analyzer is placed in front of the conveyor belt. The conveyor belt may be operated so that the belt draws the crop in the forward, reward or transversal direction with respect to harvester running. It is also configured in order that the crop falls onto the ground when it reaches the extremity of the belt. Alternatively the material could be collected at the end of the belt by a collection system to store the harvested material all together in a large storage bin. In an alternative way samples of each plots are collected in independent lots after the exit of the measuring bin or at the extremity of the conveyor belt.

Position sensors, measurement sensors, actuators and NIR analyzer are all connected through wireline and/or wireless connection to the processing unit, so that the processing unit may control operation or receive data therefrom.

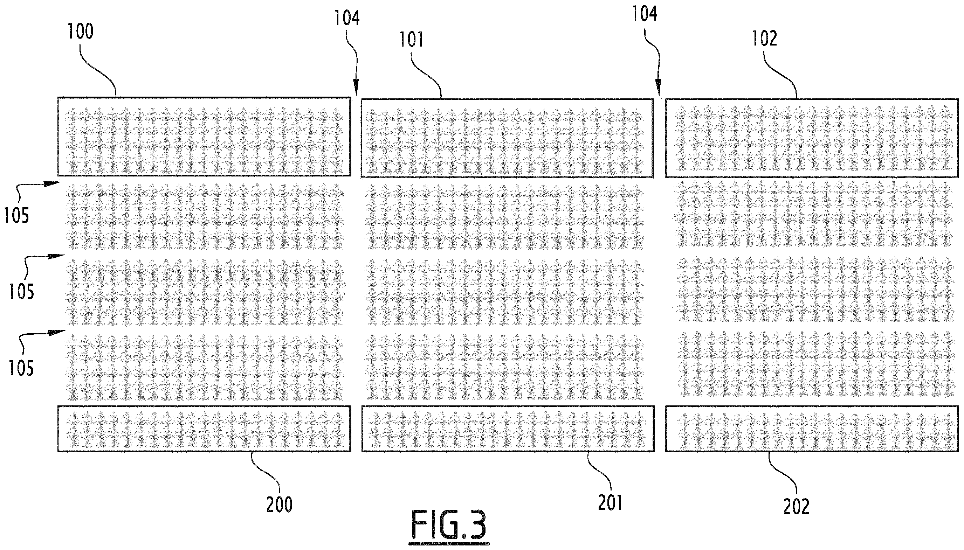

Figure 3 depicts a field containing several research plots 100-102, 200-202 each comprising two 200-202 or four 100-102 substantially parallel rows of plants. In some case of 4 rows, only the 2 middle rows can be harvested, the 2 outer rows serve to protect the inner rows from neighboring influences. Each research plot is separated from the next plot by an alley 104 that usually runs substantially perpendicular to the direction of the sowed rows. Each research plot is also separated from a neighboring plot by lanes 105 that run parallel to the direction of the plant rows. The present invention may also be used to harvest research plots that are sowed in a field without any alleys 104 and/or lanes 105. Because of small size of these research plots, harvesters have been adapted to harvest and accurately measure the volume or the weight of silage plant produced by each individual variety within the plots. The research plot harvesters are called herein harvesters. With respect to research harvesters for grain, the volume of plant material is important and it is not desired or possible to adapt the size of harvesters in order to be able to harvest several plots and measuring their parameters at the same time or to easily conceive a machine able to harvest plot after plot while measuring parameters for each plot without interruption of harvest.

The harvester begins harvesting the two rows of plot 100. The harvested plants are chopped and blown to the waiting bin. As the harvester moves forward across plot 100, all harvested plants are directed to the chopping unit, blown to the cyclone and then the crop accumulates temporary in the waiting bin.

The harvester is equipped with a geolocalization unit (GPS) and processing means in which the research plot distribution with their GPS coordinates are registered. As a result, the processing means on the harvester are immediately informed of the harvester position with respect to each plot, lane or alley. Also, the accuracy of the geolocalization and processing means allows the use of such harvester in fields comprising research plots that are planted without separation (no lanes and/or alleys).

During plot 100 is harvested, the waiting bin gate opens and crop contained within said waiting bin will fall by gravity into the measuring bin and the following harvested materiel falls directly in the weighting bin. The harvester enters alley 104. While the harvested continues moving forward, the processing means are informed by the GPS or the operator (using a pushbutton for example) that the harvester finished harvesting plot 100 and entered alley 104. After a predetermined time (that can be programmed by the operator and is equal to time needed to transfer the last material from the cutting and chopping unit to the weighting or measuring bin), the waiting bin is then closed.

The harvester then enters plot 101 and begins harvesting the plants and directing them to the chopping unit, then to the waiting bin. Also, while harvesting plot 101, the processing means cause parameters, including weight, to be measured on the crop present in the measuring bin after stabilization. Once the parameters measured and registered for plot 100 (or sent to a distant computer for registration), the processing means cause the measuring bin gate to open and the crop contained inside falls by gravity onto the conveyor belt. During the stay on the conveyor belt, other parameters may be measured, including analysis using near-infrared spectroscopy (NIRS). The crops are progressively deposited on the soil at the exit end of the belt (this is the case with the harvester of Figures 1 and 2) or can alternatively be collected by a collection system. Parameter measurements in the measuring bin usually take half the time required to harvest plot 101. Sensors connected to the processing means can start the opening of the weighing bin at the end of parameter measurements or the opening can be programmed by the operator at a predetermined time after the closure of the waiting bin.

NIR measurement might also occur on other places along the path of the chopped crop, more particularly it may be done on the pipe between the chopping unit and the cyclone.

An optical sensor connected to the processing means may be used to check that the measuring bin is empty. Once the transfer from the measuring bin to the conveyer belt is finished, the measuring bin is closed again and the waiting bin is opened. While the harvester continues harvesting plot 101, the remaining material is falling directly in measuring bin through the opened waiting bin. The cycle is repeated with the processing means (informed that the harvester finished harvesting plot 101 and enters the next alley) causing the waiting bin to be closed and crop from plot 102 to be stored in the waiting bin and the parameter measurement for plot 101 to begin. Once parameter measurement is finished and the measuring bin empty and closed again (and the harvester is about half the harvesting of plot 102), the waiting bin opens and remaining chopped crop of plot 102 is falling directly in the measuring bin.

Harvester operates at a constant speed throughout the field without requiring stopping the forward process thereof through the field, and without stopping the movement of any internal parts within the header. This continuous movement of the harvester allows an easier stabilization of the weighing means compared to the stop and go movement of the harvester.

As an alternative, the harvester may work without geolocalization. In this case, the harvester is equipped with one or more pushbuttons or similar that are actuated by the operator to cause the same series of actions, (1) waiting bin to close (after a predetermined time), (2) parameters including the weight to be measured (after a predetermined time), (3) the measuring bin gate to open, (4) the same to close, (5) the waiting bin to open, (6) the harvesting of the remaining part of the plot in the measuring bin till the following plot to begin. It is possible for him to cause steps (2) to (6) to occur during harvesting a plot. In this alternative, a short stop may occur between two plots where the operator waits till the last material of the previous plots arrived in the measuring bin. Nevertheless, the harvester operates at a high speed, in particular since the parameters of the preceding plot chops are measured during subsequent plot harvesting.

Although the invention has been described with respect to a preferred embodiment thereof, it is also to be understood that it is not to be so limited since changes and modifications can be made therein which are within the full intended scope of this invention as defined by the appended claims.

## Claims

1. A method of continuously harvesting, chopping and parameter measuring for silage plants from several plots (100-102, 200-202), comprising at least two successive plots designated A and B with plot A being harvested before plot B, comprising:
(a) harvesting and chopping plants from a plot, collecting all or part of the crop of the plot in a waiting bin (2),
(b) transferring this crop from the waiting bin to a measuring bin (7),
(c) determining at least one silage parameter, during the stay of this crop in the measuring bin, and
(d) withdrawing crop from measuring bin,
wherein step (a) for plot B occurs during step (c) for plot A, and step (b) for plot B is performed after steps (c) and (d) for plot A, and
wherein the operations of crop withdrawal from measuring bin (d) and crop transfer from waiting bin to measuring bin (b) are all automatically controlled by processing means at the end of measuring step (c).

2. The method of claim 1, wherein waiting bin and measuring bin are both equipped with an exit that is able to be closed or open, wherein waiting bin exit is closed before harvesting and chopping plants from a plot and wherein transferring all or part of a crop from said waiting bin to said measuring bin is performed after withdrawal of crop contained in the measuring bin (d) and closure of measuring bin.

3. The method of claim 2, wherein the operations of withdrawal from the measuring bin (d), closure of the measuring bin and aperture of the waiting bin are all automatically controlled by processing means at the end of measuring step.

4. The method of claim 2 or 3, wherein closing of the waiting bin is controlled by processing means when passing from one plot to another.

5. The method of any one of claims 2 to 4, wherein the plots are geolocalized and the operation of closing of the waiting bin is automatically controlled by processing means depending on the geolocalization of the harvester with respect to the plots.

6. The method of any one of the preceding claims, wherein weight and/or moisture of the crop contained in the measuring bin is determined and recorded.

7. The method of any one of the preceding claims, wherein the crop leaving the measuring bin falls onto a conveyor belt (10) and parameters of the crop during its stay on the conveyor belt are measured and recorded.

8. The method of any one of the preceding claims, wherein each plot is harvested in a continuous manner and part or the whole volume of the crop is recovered in the waiting bin.

9. A silage harvester configured to harvest and chop silage plants and measure at least one parameter of the silage crop according to the method of any one of claims 1 to 8, the harvester comprising a cutting tool (15), a chopping unit (16) and a silage collecting unit having a waiting bin (2) and a measuring bin (7) each having an entry and an exit, with the waiting bin's exit being placed in communication with the measuring bin's entry, with waiting and measuring bin's exits having monitored means allowing to close or open said exit, at least one parameter measuring sensor allowing parameter determination on the crop contained in the measuring bin, and electronic processing means that recover measured parameters and controls opening and closing of the waiting and measuring bins, wherein the silage harvester comprises geolocalization means and the electronic processing means are configured so that they detect or are informed of the harvester passing from one plot to another and so control closing of the waiting bin (2).

10. The silage harvester of claim 9, wherein the measuring bin (7) is placed below the waiting bin (2).

11. The silage harvester of claim 9 or 10, wherein the measuring bin (7) is coupled to a weight and/or moisture sensor allowing the determination of the weight and/or moisture of the measuring bin content.

12. The silage harvester of any one of claims 9 to 11, wherein the processing means control waiting bin's exit opening and closing, measuring bin's exit opening and closing, end of parameter measurement in the measuring bin and whether measuring bin is empty.

13. The silage harvester of claim 9, wherein the GPS coordinates of the research plot distribution are registered in the electronic processing means.

## Patentansprüche

1. Verfahren zum unterbrechungsfreien Ernten, Zerkleinern und Parametermessen für Silagepflanzen von mehreren Parzellen (100-102, 200-202),
umfassend wenigstens zwei aufeinanderfolgende Parzellen, die als A und B bezeichnet sind, wobei Parzelle A vor Parzelle B abgeerntet wird, umfassend:
(a) Ernten und Zerkleinern von Pflanzen einer Parzelle, Sammeln der gesamten Ernte oder eines Teils der Ernte der Parzelle in einem Wartebehälter (2),
(b) Überführen dieser Ernte von dem Wartebehälter in einen Messbehälter (7),
(c) Bestimmen wenigstens eines Silage-Parameters während des Verweilens dieser Ernte in dem Messbehälter, und
(d) Entnehmen der Ernte aus dem Messbehälter,
wobei Schritt (a) für Parzelle B während des Schrittes (c) für Parzelle A erfolgt, und Schritt (b) für Parzelle B nach den Schritten (c) und (d) für Parzelle A durchgeführt wird, und wobei die Vorgänge des Entnehmens der Ernte aus dem Messbehälter (d) und des Überführens der Ernte vom Wartebehälter in den Messbehälter (b) alle durch Verarbeitungsmittel am Ende des Mess-Schrittes (c) automatisch gesteuert werden.

2. Verfahren nach Anspruch 1, wobei Wartebehälter und Messbehälter beide mit einem Ausgang versehen sind, der geschlossen oder geöffnet werden kann, wobei der Wartebehälterausgang vor dem Ernten und Zerkleinern von Pflanzen einer Parzelle geschlossen ist, und wobei das Überführen einer gesamten Ernte oder eines Teils einer Ernte von dem Wartebehälter in den Messbehälter nach Entnahme der in dem Messbehälter (d) enthaltenen Ernte und Schließen des Messbehälters durchgeführt wird.

3. Verfahren nach Anspruch 2, wobei die Vorgänge des Entnehmens aus dem Messbehälter (d), des Schließens des Messbehälters und des Öffnens des Wartebehälters alle durch Verarbeitungsmittel am Ende des Messschrittes automatisch gesteuert werden.

4. Verfahren nach Anspruch 2 oder 3, wobei das Schließen des Wartebehälters durch Verarbeitungsmittel beim Übergang von einer Parzelle zu einer anderen gesteuert wird.

5. Verfahren nach einem der Ansprüche 2 bis 4, wobei die Parzellen geolokalisiert werden und der Vorgang des Schließens des Wartebehälters durch Verarbeitungsmittel abhängig von der Geolokalisierung des Ernters bezüglich der Parzellen automatisch gesteuert wird.

6. Verfahren nach einem der vorhergehenden Ansprüche, wobei Gewicht und/oder Feuchtigkeit der in dem Messbehälter enthaltenen Ernte bestimmt und aufgezeichnet werden.

7. Verfahren nach einem der vorhergehenden Ansprüche, wobei die aus dem Messbehälter austretende Ernte auf ein Förderband (10) fällt und Parameter der Ernte während ihres Verweilens auf dem Förderband gemessen und aufgezeichnet werden.

8. Verfahren nach einem der vorhergehenden Ansprüche, wobei jede Parzelle unterbrechungsfrei abgeerntet wird und ein Teil des Volumens oder das gesamte Volumen der Ernte in dem Wartebehälter gesammelt wird.

9. Silageernter, ausgelegt zum Ernten und Zerkleinern von Silagepflanzen und zum Messen wenigstens eines Parameters der Silageernte gemäß dem Verfahren nach einem der Ansprüche 1 bis 8, wobei der Ernter umfasst: ein Schneidwerkzeug (15), eine Zerkleinerungseinheit (16) und eine Silage-Sammeleinheit mit einem Wartebehälter (2) und einem Messbehälter (7), jeweils mit einem Eingang und einem Ausgang, wobei der Ausgang des Wartebehälters in Kommunikationsverbindung mit dem Messbehälter-Eingang steht, wobei die Ausgänge des Warte- und des Messbehälters überwachte Mittel aufweisen, die das Schließen oder Öffnen des Ausgangs ermöglichen, wenigstens einen Parameter-Messsensor, der eine Parameterbestimmung der in dem Messbehälter enthaltenen Ernte ermöglicht, und elektronische Verarbeitungsmittel, die gemessene Parameter gewinnen und das Öffnen und Schließen des Warte- und des Messbehälters steuern, wobei der Silageernter Geolokalisierungsmittel umfasst und die elektronischen Verarbeitungsmittel so ausgelegt sind, dass sie erkennen oder informiert werden, wenn der Ernter von einer Parzelle in eine andere übertritt, und so das Schließen des Wartebehälters (2) steuern.

10. Silageernter nach Anspruch 9, wobei der Messbehälter (7) unter dem Wartebehälter (2) angeordnet ist.

11. Silageernter nach Anspruch 9 oder 10, wobei der Messbehälter (7) mit einem Gewichts- und/oder Feuchtigkeitssensor gekoppelt ist, der die Bestimmung des Gewichtes und/oder der Feuchtigkeit des Messbehälterinhaltes ermöglicht.

12. Silageernter nach einem der Ansprüche 9 bis 11, wobei die Verarbeitungsmittel das Öffnen und Schließen des Wartebehälterausgangs, das Öffnen und Schließen des Messbehälterausgangs, das Ende der Parametermessung im Messbehälter und ob der Messbehälter leer ist, steuern.

13. Silageernter nach Anspruch 9, wobei die GPS-Koordinaten der Forschungsparzellen-Verteilung in den elektronischen Verarbeitungsmitteln registriert sind.

## Revendications

1. Procédé pour moissonner, couper et mesurer des paramètres en continu pour plantes fourragères à partir de plusieurs parcelles (100-102, 200-202),
comprenant au moins deux parcelles successives désignées par A et B, avec la parcelle A qui est moissonnée avant la parcelle B, comprenant les étapes consistant à :
(a) moissonner et couper les plantes d'une parcelle, collecter la totalité ou une partie de la récolte de la parcelle dans un bac d'attente (2),
(b) transférer cette récolte du bac d'attente à un bac de mesure (7),
(c) déterminer au moins un paramètre de fourrage, pendant le séjour de cette récolte dans le bac de mesure, et
(d) retirer la récolte du bac de mesure,
dans lequel l'étape (a) pour la parcelle B a lieu pendant l'étape (c) pour la parcelle A, et l'étape (b) pour la parcelle B est réalisée après les étapes (c) et (d) pour la parcelle A, et
dans lequel les opérations du retrait de la récolte du bac de mesure (d) et du transfert de la récolte du bac d'attente au bac de mesure (b) sont toutes contrôlées automatiquement par des moyens de traitement à la fin de l'étape de mesure (c).

2. Procédé selon la revendication 1, dans lequel le bac d'attente et le bac de mesure sont tous deux équipés avec une sortie qui peut être fermée ou ouverte, dans lequel la sortie du bac d'attente est fermée avant de moissonner et de couper les plantes d'une parcelle et dans lequel le transfert de la totalité ou d'une partie d'une récolte dudit bac d'attente audit bac de mesure est réalisé après le retrait de la récolte contenue dans le bac de mesure (d) et la fermeture du bac de mesure.

3. Procédé selon la revendication 2, dans lequel les opérations de retrait du bac de mesure (d), de fermeture du bac de mesure et d'ouverture du bac d'attente sont toutes contrôlées automatiquement par des moyens de traitement à la fin de l'étape de mesure.

4. Procédé selon la revendication 2 ou 3, dans lequel la fermeture du bac d'attente est contrôlée par des moyens de traitement lors du passage d'une parcelle à une autre.

5. Procédé selon l'une quelconque des revendications 2 à 4, dans lequel les parcelles sont géolocalisées et l'opération de fermeture du bac d'attente est automatiquement contrôlée par des moyens de traitement en fonction de la géolocalisation de la moissonneuse par rapport aux parcelles.

6. Procédé selon l'une quelconque des revendications précédentes, dans lequel le poids et/ou l'humidité de la récolte contenue dans le bac de mesure sont déterminés et enregistrés.

7. Procédé selon l'une quelconque des revendications précédentes, dans lequel la récolte sortant du bac de mesure tombe sur une bande transporteuse (10) et les paramètres de la récolte pendant son séjour sur la bande transporteuse sont mesurés et enregistrés.

8. Procédé selon l'une quelconque des revendications précédentes, dans lequel chaque parcelle est moissonnée d'une manière continue et une partie ou la totalité du volume de la récolte est récupérée dans le bac d'attente

9. Moissonneuse-batteuse configurée pour moissonner et couper les plantes fourragères et mesurer au moins un paramètre de la récolte fourragère selon le procédé selon l'une quelconque des revendications 1 à 8, la moissonneuse comprenant un outil de coupe (15), une unité de coupe (16) et une unité de collecte de fourrage ayant un bac d'attente (2) et un bac de mesure (7) ayant chacun une entrée et une sortie, avec la sortie du bac d'attente placée en communication avec l'entrée du bac de mesure, avec les sorties du bac d'attente et du bac de mesure qui ont des moyens commandés permettant de fermer ou d'ouvrir ladite sortie, au moins un capteur de mesure de paramètre qui permet la détermination de paramètre sur la récolte contenue dans le bac de mesure, et des moyens de traitement électroniques qui récupèrent des paramètres mesurés et commandent l'ouverture et la fermeture des bacs d'attente et de mesure, dans lequel la moissonneuse-batteuse comprend des moyens de géolocalisation et les moyens de traitement électroniques sont configurés de sorte qu'ils détectent ou sont informés du fait que la moissonneuse passe d'une parcelle à l'autre et ainsi contrôlent la fermeture du bac d'attente (2).

10. Moissonneuse-batteuse selon la revendication 9, dans laquelle le bac de mesure (7) est placé sous le bac d'attente (2).

11. Moissonneuse-batteuse selon la revendication 9 ou 10, dans laquelle le bac de mesure (7) est couplé à un capteur de poids et/ou d'humidité permettant la détermination du poids et/ou de l'humidité du contenu du bac de mesure.

12. Moissonneuse-batteuse selon l'une quelconque des revendications 9 à 11, dans laquelle les moyens de traitement contrôlent l'ouverture et la fermeture de sortie, l'ouverture et la fermeture de sortie du bac de mesure, la fin de la mesure de paramètres dans le bac de mesure et si le bac de mesure est vide.

13. Moissonneuse-batteuse selon la revendication 9, dans laquelle les coordonnées GPS de la répartition de parcelles de recherche sont enregistrées dans les moyens de traitement électroniques.
